# EUROPEAN PATENT SPECIFICATION

(11) **EP 4 104 978 B1**
(45) Date of publication and mention of the grant of the patent: **18.02.2026**
(21) Application number: 21179167.8
(22) Date of filing: 14.06.2021
(51) Int. Cl.: B25J 9/16, G05B 19/418, G05B 19/402

(54) **METHOD FOR CONTROLLING A ROBOT, DATA PROCESSING APPARATUS, COMPUTER PROGRAM PRODUCT, AND COMPUTER-READABLE STORAGE MEDIUM**
VERFAHREN ZUR STEUERUNG EINES ROBOTERS, DATENVERARBEITUNGSVORRICHTUNG, COMPUTERPROGRAMMPRODUKT UND COMPUTERLESBARES SPEICHERMEDIUM
PROCÉDÉ DE COMMANDE D'UN ROBOT, APPAREIL DE TRAITEMENT DE DONNÉES, PRODUIT-PROGRAMME INFORMATIQUE ET SUPPORT D'INFORMATIONS LISIBLE PAR ORDINATEUR

(43) Date of publication of application: 21.12.2022
(73) Proprietor: Bayerische Motoren Werke Aktiengesellschaft, 80809 München (DE)
(72) Inventor: Cornelius, Matt, Greenville, 29615 (US); Brown, Josh, Greer, 29651 (US); Park, Chulhun, Greer, 29651 (US); Tingle, Curtis, Greenville, 29615 (US); Scott, Eugene, Simpsonville, 29681 (US); Hall, Lee, SC, Greer (US); Rhoads, Scott, Seneca, 29672 (US)

(56) References cited:
- GB-A- 2 211 318
- JP-A- H0 288 187

## Description

The invention relates to a method for controlling a robot.

US 10 675 752 B2 shows an absolute robot-assisted positioning method for initializing a facility. Moreover, KR 100721642 B1 shows a remote control and diagnosis apparatus for a control target having a control target including a motor and a controller for controlling the control target. Moreover, DE 10 2006 041 886 A1 shows a method for positioning components. Furthermore, GB 2211318 A shows an assembly arrangement wherein a plurality of work pieces are to be connected to a body to assemble a structure with a given degree of precision. Moreover, JPH0288187A shows a method in which, after moving to a predetermined work origin position defined by teaching data, a positional deviation amount of a workpiece is detected by a position sensor attached to a robot,

It is an object of the present invention to provide a method for controlling a robot such that said robot may be controlled and thus operated in a particularly advantageous way.

This object is solved by the subject-matters of the independent claim. Advantageous embodiments with expedient developments of the invention are indicated in the dependent claims.

The invention relates to a method for controlling a robot by an electronic control unit. This means that said electronic control unit is used to perform the method. The electronic control unit may be or comprise at least one processing unit. The processing unit may be a central processing unit, or the processing unit may be referred to as a central processing unit (CPU). The processing unit, in particular the central processing unit, can be also referred to as a central processor, a main processor or just processor. As it is well-known from the general prior art, the processing unit may be or comprise at least one electronic circuitry which is configured to execute instructions comprising a computer program or included in a computer program. In said method, the robot installs at least one first component on a second component, thereby producing a first assembly comprising the first component and the second component. If, in the following, the first component and/or the second component are mentioned, then, unless otherwise specified, this is to be understood as the first component of the first assembly and/or the second component of the first assembly.

Preferably, by installing the first component on the second component, the first component is attached or fixed to the second component. For example, the robot may be configured as an industrial robot which is a robot system used for manufacturing. In said method, the robot is used for manufacturing, i.e., producing said first assembly. Preferably, the robot may comprise a plurality of robot axes which are also referred to as robot arms. For example, the robot arms are movably connected with each other such that the robot arms are translationally and/or rotationally movable in relation to each other. The robot may comprise an end effector configured to interact with an environment or surroundings of the robot. This means that the robot may interact with its environment or surroundings by the end effector. As a well-known from the general state of the art, the end effector may be the last element or the kinematic chain of the robot. In other words, the end effector may be at an end, in particular at the last end, of one of the robot arms, in particular of the last robot arm of the robot. The respective robot arm is also referred to as a robotic arm. The end effector may be or comprise at least one tool such as, for example, a gripper. Thus, for example, the robot may grip and/or hold said first component by the end effector. Thus, the first component may be releasably attached to the robot by the end effector. Moreover, whilst the first component is held on the robot by the end effector, the first component may be moved in relation to the second component by the robot, in particular whilst the second component is stationary. By moving the first component in relation to the second component, the robot may arrange the first component and the second component, and the robot may install the first component on the second component. In other words, the first component may be moved in relation to the second component and installed on the second component by the end effector. In order to install the first component on the second component and thus in order to move the first component in relation to the second component, at least two of said robot arms are moved, in particular translationally and/or rotationally in relation to each other, for example, one of said two robot arms which are moved in relation to each other in order to install the first component and the second component may be the end effector. In order to move the robot, i.e., in order to move the robot arms in relation to each other thereby moving the first component in relation to the second component and thereby installing the first component on the second component, the electronic control unit controls the robot.

In the method, in particular in a first step of the method, a target position is determined by the electronic control unit. At the target position, the first component is to be installed on the second component by the robot. For example, the electronic control unit determines the target position in such a way that the electronic control unit retrieves and/or receives the target position, in particular from a memory. For example, the memory may be a memory of the electronic control unit. Moreover, for example, the memory may be an electronic memory. Thus, for example, the target position is stored in said memory.

In the method, in particular in a second step of the method, absolute measurement data are determined by the electronic control unit. The absolute measurement data characterize at least one actual installation position at which a first component of at least one completed second assembly is installed on a second component of the completed second assembly identical in construction to the first assembly to be produced by the robot. Preferably, the absolute measurement data characterize actual installation positions at which first components of completed second assemblies are installed on second components of the completed second assemblies identical in construction to the first assembly to be produced by the robot. For example, the electronic control unit determines the absolute measurement data in such a way that the electronic control unit retrieves and/or receives the absolute measurement data, in particular from said memory.

The respective completed second assembly had been produced prior to producing the first assembly and thus prior to performing the method. For example, at least one of the completed second assemblies had been produced by the very same robot by which the first assembly is to be produced. Alternatively or additionally, at least one of the completed second assemblies had been produced by another robot. Since, the respective second assembly is identical in construction to the first assembly to be produced by the robot, the respective second assembly comprises first and second components which are identical in construction to the first and second components of the first assembly to be produced. For example, the completed second assemblies are a, in particular random, selection of a number of completed assemblies which had been produced prior to producing the first assembly. In other words, for example, prior to producing the first assembly, a first number of assemblies which are identical in construction to the first assembly had been produced. In this regard, for example, the second assemblies may be a, in particular random, selection of the first number such that, for example, a second number of the second assemblies may be smaller than the first number, or the second number may be equal to the first number. For example, a dataset is stored in the memory, the dataset characterizing the actual installation positions at which the first components of the assemblies that had been produced prior to producing the first assembly are installed on the second components of the assemblies which had been produced prior to producing the first assembly. In this regard, for example, the electronic control unit selects a data sub-set from the dataset, wherein, for example, the data sub-set is smaller than the dataset. Moreover, for example, the data sub-set is or comprises the absolute measurement data such that, for example, the data sub-set characterizes the actual installation positions at which the first components of the completed second assemblies are installed on the second components of the completed second assemblies which may be or form an assembly sub-set of the assemblies, in particular of all assemblies, which had been produced prior to producing the first assembly.

Moreover, in the method, in particular in a third step of the method, at least one deviation value is determined by the electronic control unit. Said deviation value characterizes a deviation of at least one of the actual installation positions from the target position.

Furthermore, in the method, in particular in a fourth step of the method, the robot is controlled on the basis of the deviation value by a controller executed by the electronic control unit. Thus, the controller and thus the electronic control unit control the robot on the basis of the deviation value, i.e., on the basis of said deviation of the at least one actual installation position from the target position.

The invention is a system or allows for realizing a system or the invention, in particular, the method, is also referred to as a system, wherein said system is able to adaptively control the robot, in particular a positioning of the robot based on absolute process data. Said absolute process data may be or comprise said absolute measurement data. Moreover, for example, said positioning of the robot may also be referred to as robot positioning which may be or comprise a positioning of said end effector and thus the first component, in particular in relation to the second component. The present invention differs from conventional solutions at least in that the invention seeks process accuracy, not necessarily robot accuracy. This will be explained in greater detail below.

The method according to the present invention is a control method or a control system, which may achieve a particularly high accuracy in positioning the first component in relation to the second component and thus in installing the first component on the second component. In other words, an actual position at which the first component is installed on the second component by the robot is equal to the target position or differs only slightly from the target position. It has been found that a +/- 0.5 mm accuracy in positioning the first component in relation to the second component may be achieved by the invention. The invention achieves this high accuracy by automatically adjusting a position of the robot, in particular of the end effector and thus the first component based on said absolute measurement data of a sample of completed assemblies in the form of said completed second assemblies. Conventional solutions may adaptively control robot positioning based on measurements of the robot's real path versus a planned path, or something similar. Moreover, conventional solutions may serve as robot training methods that significantly reduce and possibly eliminate manual effort in achieving robot accuracy. The present invention differs from conventional solutions at least in that the invention sees process accuracy, not robot accuracy. Conventional solutions assume that high process accuracy will be the result of high robot accuracy, therefore, conventional solutions or systems control robot positioning based on feedback about the robot's position. The present invention, however, identifies that controlling robot positioning based on feedback about a process the robot is performing is more effective in achieving high process accuracy, within normal production operation. Said process the robot is performing may be an installation process in which said first component is installed on the second component thereby producing the first assembly. Said absolute measurement data are process data or absolute process data. Using said process data as feedback to adjust the robot, in particular a position of the robot and thus the first component allows said system, which is also referred to as a control system, to respond to how the robot is impacting production, rather than how well the robot is following its routine. This difference between conventional solutions and the invention allows the present invention to be a more reliable, robust and responsive control system than conventional solutions. The present invention is better suited for responding to dynamic inputs of complex production processes.

An additional advantage of the present invention over conventional solutions is at least that a positional accuracy of the installation process may be improved to, for example, +/- 0.5 mm without requiring a measurement feedback process to occur each time a first component such as, for example, a stud is installed by the robot. Conventional solutions describe or comprise systems that a require a feedback process to occur each time a robot moves to a new position. Each time the robot travels to a new position, the feedback process is initiated, and the robot moves closer to its desired value iteratively. This feedback process would not be possible for an installation process such as a stud installation process, because this process would severely exceed an allowable installation cycle time, due to a large number of first components installed on each second component. The present invention may measure an optimal sample size of completed assemblies that had been produced prior to producing the first assembly to accurately represent a current process state of each first assembly without having to perform a feedback adjustment process each time a first component is installed. The above-mentioned, particularly high position accuracy may be achieved within confines of an original installation cycle time, which would not be possible with any of the conventional solutions.

In the invention, the controller calculates and provides at least one current adjustment value on the basis of the deviation value. By the adjustment value, a nominal position of the robot is adjusted. For example, the electronic control unit determines the nominal position, in particular in such a way that the electronic control unit retrieves and/or receives the nominal position which, for example, may be stored in said memory. By adjusting, i.e. correcting the nominal position by the adjustment value a particularly high accuracy in positioning the robot and thus the first component, in particular in relation to the second component, may be realized.

In order to position the robot and thus the first component particularly accurately, the controller calculates for each of a predetermined number of preceding, second adjustment values average values of the deviation values by which the nominal position had been adjusted at preceding points in time, wherein the current adjustment value is calculated on the basis of its corresponding average value, and wherein the controller successively compares the average value with decreasing average limits until the average value is greater than that one of the average limits the average value was last compared with, and wherein the controller chooses the average limit the average value was last compared with. Thereby, a particularly high accuracy may be realized, and cycle time can be kept particularly low.

In a particularly advantageous embodiment of the invention, the controller determines a time span between a current time and the last time the nominal position of the robot had been adjusted, wherein the robot is controlled by the controller on the basis of the time span. Thereby, a particularly high accuracy may be realized, and a cycle time of the installation process in which the first component is installed on the second component of the first assembly may be kept particularly low.

In a further advantageous embodiment of the invention, the nominal position of the robot is adjusted by the current adjustment value, if and, preferably, only if the time span exceeds a predetermined threshold. Thus, a particularly high accuracy and a particularly high cycle time may be realized.

In a further advantageous embodiment of the invention, a first criterion which must be met for the nominal position of the robot to be adjusted by the current adjustment value comprises that the time span exceeds the predetermined threshold value. Thus, the nominal position of the robot is adjusted by the current adjustment value, if, and preferably only if, the time span exceeds the predetermined threshold, i.e., if, and preferably only if, the first criterion is met.

Moreover, preferably, at least one additional, second criterion must be met for the nominal position of the robot to be adjusted by the current adjustment value such that, preferably, the nominal position of the robot is adjusted by the current adjustment value, if, and preferably only if, the second criterion is met. Thus, preferably, the normal operation of the robot is adjusted by the current adjustment value, if, and preferably only if, both, the first criterion and the second criterion are met. Thus, a particularly high process stability may be achieved, such that a particularly high accuracy may be realized.

In a particularly advantageous embodiment of the invention, the additional, second criterion comprises that an amount of data collected for adjusting the nominal position exceeds a predetermined second threshold. Thus, a particularly high process stability may be realized such that cycle time can be kept particularly low.

In a further advantageous embodiment of the invention, the adjustment value is calculated on the basis of a product of the chosen average limit and a, in particular, negative constant corresponding to the chosen average limit, such that the nominal position of the robot, can be adjusted in a particularly advantageous way.

In a further advantageous embodiment of the invention, the controller performs a plurality of successive calculation steps in which the average value is calculated respectively, wherein the controller calculates a sum of the average values calculated in the preceding calculation steps, and wherein the current adjustment value is calculated on the basis of the sum.

In a further advantageous embodiment of the invention, the controller successively compares the sum with decreasing sum limits until the sum is greater than that one of the sum limits the sum was last compared with, and wherein the controller choses the sum limit the sum was last compared with.

Preferably, the adjustment value is calculated on the basis of a product of the chosen sum limit and a further, in particular negative, constant corresponding to the chosen sum limit.

In order to realize a particularly high accuracy in positioning the robot and thus the first component in a further embodiment of the invention, the controller is part of a closed loop feedback control system by which the robot is controlled.

Any further embodiment of the invention, a stud is used as the first component. The idea behind this embodiment is that installing studs may be a time-consuming process since, conventionally, a high number of studs is to be installed. By the invention, a cycle for installing the studs can be kept particularly low, and a particularly high accuracy in positioning the studs may be realized.

For example, the second component can be made of one or more subassemblies. The second component may be equipped with a base coordinate system. In other words, a base coordinate system may be assigned to the second component. This base coordinate system is a coordinate system used for both installing the first component to the second component and measuring the position, i.e. the actual installation position of the first component. The base coordinate system is shared by an installation and measurement process, which allows the invention to operate the way it is described above and in the following.

In a further advantageous embodiment of the invention, a self-supporting body of a passenger car is used as a second component. Thus, by the invention, the passenger car may be manufactured or produced in a particularly low time and with a particularly high quality since a particularly high number of first components such as studs may be positioned in relation to the self-supporting body in a particularly low time and with a particularly high accuracy.

Disclosed is also a data processing apparatus comprising a processor such as said electronic control unit. The processor is configured to perform the method according to the invention.

Disclosed is also a computer program product comprising instructions which, when the program is executed by a computer, cause the computer to carry out the method of the present invention.

Disclosed is a computer-readable storage medium comprising instructions which, when the executed by a computer, cause the computer to carry out the method according to the invention.

In the following, the invention will be described in greater detail on the example of a stud as the first component or as studs of first components and a self-supporting body of a passenger vehicle as the second component. This means, the second component may be a self-supporting body for a passenger vehicle, or the second component may be a part of a self-supporting body for a passenger vehicle. For example, the second component may be an underbody of a self-supporting body for a passenger vehicle. In this regard, the invention was motivated by a quality goal identified at a start of a production of a model range of a vehicle in a plant. A positional accuracy of studs installed in a body shop was identified as a key contributor to building a quality total vehicle, ensuring stable production processes, and reducing costs of vehicle production. For example, a standard for stud accuracy is +/- 2.5 mm. This means that conventionally, an actual position at which the stud is to be installed on the second component must not deviate from a nominal position by more than +/- 2.5 mm. However, an accuracy goal of +/- 1.5 mm was targeted to achieve benefits of improved stud position control. This +/- 1.5 mm goal was subsequently adopted by each additional plant. The primary challenge to achieve the +/- 1.5 mm accuracy goal was the deficiency of stud position management within the plant, in particular within a body shop or a station in or at which the stud is to be installed. Particularly, several studs are installed or are to be installed on the self-supporting body at or in said station. In the following, the self-supporting body is also referred to as a body. Conventionally, the body shop installs and measures over 1000 unique studs across several models produced. To achieve the process time necessary to install this large number of studs, parallel installation stations are used. Normally, there are two to four parallel stations installing the same stud, however, there are instances where up to ten parallel stations are installing the same stud. Conventionally, the stud position data of each individual parallel installation station needed to be manually monitored and controlled. Additionally, to fully control the position of each stud, each measured direction of the stud's position had to be monitored and controlled. Ultimately, there were 12000 unique points that had to be monitored and adjusted to fully control the stud installation process that occurs in the body shop.

A necessity of the invention was determined by a difficult task of stud maintenance in the body shop. Maintaining studs to the +/- 2.5 mm standard accuracy was manually achievable, while maintaining the studs to the target accuracy of +/- 1.5 mm would have been very difficult to accomplish manually, although possible with enough head count. However, if the requested positional accuracy of studs is requested to be tighter in the future, for example, to accommodate new designs, then it would be impossible to achieve manually. Therefore, the present invention was both created to simplify the task of +/- 1.5 mm stud accuracy and to prepare for an inevitable future task of maintaining tighter stud tolerances such as, for example, +/- 0.5 mm accuracy.

Conventionally, a stud positioning management process requires manual observation of inline laser radar measurement data on all unique stud points that require control. In a conventional process, if a stud position was identified outside of the predetermined accuracy target, then the stud position was adjusted. These stud installation stations in the body shop are equipped with a method for adjusting stud positions by inputting stud offset values into a file read by the installation robot's controller. The necessary stud offset for returning the stud position to within the +/- 1.5 mm accuracy target was made manually. This stud position management approach overly relied upon manually analyses, decision making and action, which made maintaining the target accuracy extremely time-intensive and unreliable. Conventionally, the stud position management approach required approximately 100 hours per week for a team of associates that were also responsible for numerous other dimensionally-critical processes. This stud position management approach was able to achieve the +/- 1.5 mm accuracy goal if the data was continually monitored by the team. However, it was clear that this stud position management system would be incapable of achieving any stud accuracy less than 1.5 mm, which would inevitably be requested in the future. Moreover, the following disadvantages of conventional processes had been identified:
- high workload for a team of associates to fulfill requested stud accuracy;
- high manual stud maintenance time;
- no possibility to implement tighter stud position accuracy.

Conventional solutions had been analyzed. Conventionally, robot position is controlled using a closed loop feedback control system that compares the robot's actual position to its program position. Such a control system may improve the performance of the robot, but it does not guarantee improvement in the performance of the installation process the robot is performing. Robot accuracy does not necessarily result in process accuracy. Therefore, such a conventional solution could not be relied upon to maintain stud position accuracy. Such as examples of conventional solutions seem to be more useful for reducing manually effort in commissioning robots or training robots on a new process.

Examples of known and conventional processes that control robot positions based on feedback from the installation process do so using the robot's local frame of reference. The automated system according to the present invention, however, may comprise the stud installation process to be controlled in an absolute reference frame, in particular by considering the absolute measurement data for positioning the robot and thus the first component (stud). Controlling the studs in the absolute reference frame makes the automated system more robust in handling unexpected target or process changes related to the stud installation process. Controlling installed positions based on the robot's local frame of reference generally results in the installed part being aligned to a distinct feature near the installed part. However, using the local frame of reference makes the system susceptible to tolerance stack-up issues that would lead to the stud being out of position, because one or more local parts are out of position. The use of the absolute reference frame reduces the risk of studs being out of position due to other parts being out of position.

Moreover, conventional solutions may comprise systems which control robot positioning using data collected every time an installation process is performed. Completing one of these control loops each time a new car or a new body enters a stud installation station would be extremely difficult within the prescribed process time for stud installation. The controller design in conventional solutions would need to be drastically changed to fulfill the time requirements of the described installation process according to the present invention.

The invention is or may be an automated method for controlling stud positioning using the absolute measurement feedback data, i.e. the absolute measurement data, which may be gathered by at least one inline laser radar measurement station, for example, in said body shop. While an initial target accuracy of +/- 1.5 mm for all unique stud points was identified as a mandatory or advantageous system requirement, the automated system was designed around a goal of +/- 0.5 mm for unique stud points. A second mandatory or advantageous objective of the automated system was the elimination of manual intervention in adjusting stud positions and their reduction in manually monitoring data for quality issues to less than four hours per week. The +/- 0.5 mm stud accuracy is five times better than the above-mentioned standard and three times better than a target accuracy proposed during the above-mentioned launch in said plant, while requiring less than 5% of the original manual monitoring time.

For example, the invention uses an absolute measurement system. The absolute measurement system may be a system that reports the location, i.e. the actual installation position of the first component relative to the base coordinate system. For example, the absolute measurement system measures the actual installation positions at which the first components of the completed second assemblies are installed on the second components of the completed second assemblies. Thus, for example, the absolute measurement system generates and, for example, provides said absolute measurement data. In a possible implementation of the invention, the absolute measurement system may be or comprise at least one inline laser radar measurement station which may collect, in particular all, stud position data on a randomly sampled set of produced vehicles. Thus, for example, said stud position data may be said absolute measurement data such that, for example, said randomly sampled set of produced vehicles may be said completed second assemblies which had been produced prior to producing the first assembly. For example, an offline coordinate measuring machine (CMM) system could also serve as the absolute measurement system for the invention, in particular assuming this offline system can provide a sufficient sampling frequency for characterizing the process. Additionally, for example, a measurement system could be created that is a combination of a relative measurement concept, for example, a localize version system, and an absolute measurement system. Thus, for example, said measurement system measuring the actual installation positions and, thus, creating and providing the absolute measurement data. For this combination measurement system to fulfill possible requirements, an accurate correlation should exist between the relative and the absolute measurement systems, and this correlation may be automatically calculated.

Further details of the invention will be apparent from the following description of a preferred embodiment with the accompanying drawings. The drawings show in:
- Fig. 1: a first flow diagram for illustrating a method for controlling a robot;
- Fig. 2: a second flow diagram for illustrating a controller used in said method;
- Fig. 3: a third flow diagram for illustrating the method; and
- Fig. 4: a graphical representation of the method on an installation process.

In the figures the same elements or elements having the same function are indicated by the same reference signs.

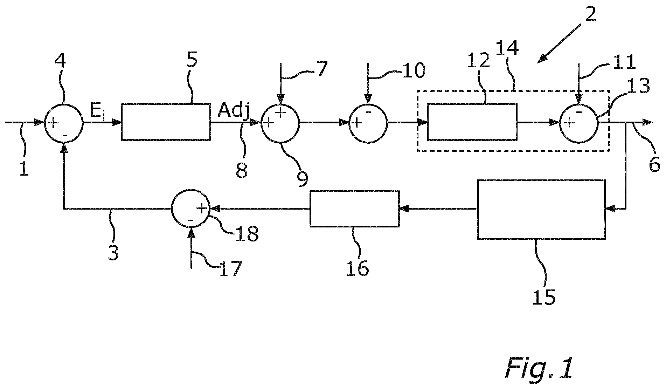

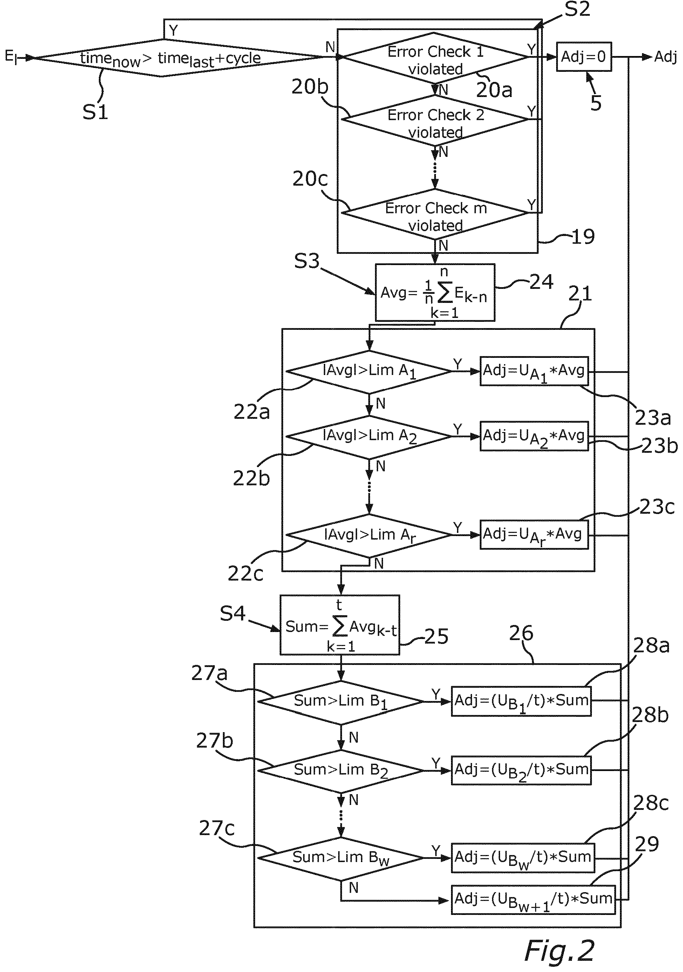

In the following, a method for controlling a robot by an electronic control unit is described with reference to Figs. 1 and 2. In the method, at least a first component is installed on a second component by the robots, thereby producing a first assembly comprising the first and second component. For example, several first components are installed on the second component. Moreover, for example, the first component may be a stud. Furthermore, for example, the second component may be a self-supporting body for a passenger vehicle, or the second component may be at least a part of a self-supporting body for a passenger vehicle. For example, said part of the self-supporting body may be an underbody. The self-supporting body is also referred to as a body.

As illustrated by an arrow 1, a target position at which the first component (stud) is to be installed on the second component (body) by the robot is determined by the electronic control unit. Said electronic control unit is schematically shown in Fig. 1 and indicated by 2. As illustrated by an arrow 3, absolute measurement data are determined by the electronic control unit 2. The absolute measurement data are absolute process data which are also referred to as process data. The absolute measurement data characterize actual installation positions at which the first components of the completed second assemblies are installed on second components of the completed second assemblies identical in instruction to the first assembly to be produced by the robot. In other words, an element 4 illustrates that the electronic control unit 2 determines the target position and the absolute measurement data. Moreover, as illustrated by the element 4, at least one deviation value Eᵢ is determined by the electronic control unit 2, wherein the deviation value is also referred to as a position deviation. The position deviation (deviation value Eᵢ) characterizes a deviation of at least one of the actual installation positions from the target position. As will be described in greater detail below, the robot is controlled on the basis of the deviation value Eᵢ by a controller 5 executed by the electronic control unit 2.

In order to install the first component on the second component, the first component is moved by the robot in relation to the second component, in particular whilst the second component is stationary. Preferably, the second component can be made of one or more subassemblies. The second component may be equipped with a base coordinate system.

In other words, a base coordinate system may be assigned to the second component. In this regard, the first component is moved relative to the base coordinate system by the robot, and the second component has already been fixed to the base coordinate system during a previous installation process. In other words, for example, the second component has already been fixed in relation to the base coordinate system during said previous installation process. The second component can be made of a variety of subassemblies with different features, however, for example, the only feature of the second component that the first component is installed relative to is the base coordinate system. For example, this first component is held on the robot by an end effector of the robot. For example, the end effector may be or comprise a gripper holding the first component. In order to move the first component in relation to the second component and thus in order to install the first component on the second component, the end effector of the robot and thus at least a part of the robot is moved in relation to the second component, in particular whilst the first component is held on said part of the robot. For example, said part of the robot may be said end effector. Thereby, the robot, in particular the end effector, and thus the first component may be moved to an actual position illustrated by an arrow 6. The actual position of the robot and thus the first component is a result of controlling the robot by the controller 5, i.e. by the electronic control unit 2 and thus the method.

The method is also referred as a system or a control system by which the robot is controlled. As illustrated by an arrow 7, a nominal position of the robot may be inputted into the system. In other words, the nominal position of the robot may be determined by the electronic control unit 2. The nominal position of the robot is also referred to as a nominal robot position. Thus, for example, the nominal position and the target position are inputted into the system, i.e. determined by the electronic control unit 2. As illustrated by the element 4, the target position is compared to the at least one actual installation position, i.e. to a measurement of at least one of the actual target positions to calculate the position deviation (i.e. the deviation value Eᵢ).The controller 5 described with reference to Fig. 2 may produce an adjustment value Adj which is also referred to as a position adjustment. The position adjustment is provided by the controller 5 as illustrated by an arrow 8. As may be gathered from Fig. 1, the position adjustment is calculated or produced by the controller 5 based on the position deviation. The position adjustment is used to control the robot. In other words, the robot is controlled on the basis of the position deviation and the position adjustment. In other words, the position deviation is fed into a robot installation process in which the first component is installed on the second component by the robot. As illustrated by an element 9, the nominal position illustrated by the arrow 7 is adjusted by the adjustment value Adj, i.e. by the position adjustment. An arrow 10 illustrates a pre-installation quality of the first component and/or the second component, and an arrow 11 illustrates a possible installation process error. This means that the pre-installation quality and the installation process error may influence the installation process in which the first component is to be installing on the second component by the robot. In Fig. 1, a block 12 illustrates the ideal installation process which may be influenced by the possible and, for example, not necessarily known installation process error as illustrated by an element 13. Thus, the block 12 and the element 13 represent a plant 14 in which the installation process is perform by the robot. As may be gathered from Fig. 1, the actual position illustrated by the arrow 6 is a summation of the nominal robot position, the position adjustment, the pre-installation quality, and the installation process error. The installation process error is also referred to as an installation error. The installation error can be comprised of errors related to robot motion, robot end effectors and process fixturing. The pre-installation quality is also referred to as pre-process part quality which is a summation of all inaccuracies in components involved in the installation process, in particular prior to the installation process occurring, i.e. prior to producing the first assembly.

In Fig. 1, a block 15 illustrates the second assemblies. For example, the second assemblies are a random selection of completed assemblies that had been produced prior to producing the first assembly. Thus, the second assemblies are a percentage of the completed assemblies that had been produced prior to producing the first assembly.

In Fig. 1, a block 16 illustrates a measurement system which may be in absolute measurement system. By the measurement system, the actual installation positions of the first components of the completed second assemblies are measured such that, for example, the measurement system generates and provides the absolute measurement data illustrated by the arrow 3. For example, the completed second assemblies are measured by the measurement system to estimate the actual installation positions. In again other words, the measurement system performs a measurement process in which the actual installation positions are measured. For this purpose, for example, the measurement system comprises equipment to measure the actual installation positions. The measurement of the actual installation positions may be subject to a measurement error illustrated by an arrow 17 such that, as illustrated by an element 18, the measurement performed by the measurement system may be influenced by the measurement error. Thus, the measurement process and the equipment may vary. However, the measurement system includes some component of an absolute measurement system. The measurement error is also referred to as a measurement process error. Measurement process error, nominal robot position, pre-process part quality (pre-installation quality), and installation process error (installation error) generally may not explicitly known by the system, i.e. the method. In certain circumstances, each of these error sources can be explicitly determined, however, the system, i.e. the method for controlling the robot, does not require them to be explicitly known to function properly.

Ultimately, the system responds to disturbances such as the pre-process part quality, the installation process error, nominal robot position changes, target position changes by controlling the position adjustment (adjustment value Adj) in relation to the position deviation (deviation value Eᵢ), which is the difference between target position and measured installation position, i.e. at least one of the measured actual installation position.

Fig. 2 illustrates the controller 5 for the system, i.e. for the method. In other words, Fig. 2 illustrates a design of the controller 5. An input of the controller 5 is the position deviation, i.e. the deviation value Eᵢ. An output of the controller 5 is the position adjustment, i.e. the adjustment value Adj. The position adjustment is also referred to as an adjustment position. Preferably, the controller 5 is a non-linear, multi-stage controller.

In a first stage S1, the controller 5 compares a current time with the time of the last position adjustment, i.e. the last time the nominal position of the robot had been adjusted, in particular by the controller 5. New position adjustments may only be made, if enough time has passed since the last position adjustment, i.e. if a time span between the current time and the time of the last position adjustment exceeds a first threshold. A minimum interval between position adjustments, i.e. the first threshold may be determined by a use case of the method, and no default values are required for the method to function. In Fig. 2, "time_{now}" designates the current time, "timeₗₐₛₜ" designates the last time the controller 5 run, i.e. the last time the nominal position had been adjusted, and "cycle" designates a frequency of the controller 5.

A second stage S2 of the controller 5 is comprises of multiple system safeties 19 which may comprise or be formed by error checks 20a-c. The error check 20a-c may be also referred to as error check events or error check steps. The system safeties 19 may be unique to an implementation of the method. Examples of the system safeties 19 may include checking for system stability, verifying that enough data has been collected for a position adjustment, and ensuring that relevant conditions of the installation process are understood. The respective system safeties 19 may check whether or not the respective error check 20a-c is violated. The position adjustment is not determined when at least one of the system safeties 19, i.e. at least one of the error checks 20a-c is violated. The first and second stages S1 and S2 of the controller 5 ensure that position adjustments, i.e. adjustment values Adj are only calculated when appropriate. In other words, the first and second stages S1 and S2 of the controller 5 ensure that the adjustment value Adj is not equal to zero, i.e. the nominal position is adjusted, i.e. corrected only when appropriate.

If the first and second stages S1 and S2 are successfully cleared, then, in a third stage S3 of the controller 5, an average value Avg of the last n position deviations is calculated. In this regard, n may designate a positive integer number. Particularly, n designates a number of samples for averaging. The average value Avg is also referred to as an average. In other words, the average value Avg is an n-sample deviation average. In Fig. 2, a block 24 illustrates that the average value Avg, i.e. the average, is calculated in the third stage S3. Moreover, the third stage S3 comprises a rapid response 21. The rapid response 21 is perform in a fourth stage S4 of the controller 5. Having calculated the average, the average (average value Avg) is successively compared to decreasing average limits Lim A_{1...r} in the fourth stage S4, i.e. in the rapid response 21. In this fourth stage S4, the average is successively compared to the decreasing average limits until an average limit is found where the absolute value of the average is greater than the average limit.

Once the average limit is found, the adjustment position is calculated as a product of the average and a negative constant U_{A1...r} corresponding to the found average limit. In Fig. 2, comparison steps 22a-c illustrate the successive comparisons between the average and the average limits, and blocks 23a-c illustrate that the adjustment position is calculated as the product of the average and the negative constant corresponding to the found average limit.

If, however, the absolute value of the average is never greater than any average limit, wherein, for example, said average limits are stored in a memory of the electronic control unit 2, when a fourth stage S4 of the controller 5 is initiated.

In the fourth stage S4 of the controller 5, a sum Sum of the last t position deviations is calculated as illustrated by a block 24. For example, t designates a positive integer number. Particularly, t designates a number of averages needed to calculate to sum Sum. Moreover, the sum Sum is the sum of averages of the last t times the controller 5 was run. Similarly to the stage S3, the sum Sum is successively compared to decreasing sum limits Lim B_{1...w}. The fourth stage S4 comprises a long response 26 comprising comparison steps 27a-c in which the sum Sum is compared with the sum limits Lim B_{1...w}. The sum is successively compared to the decreasing sum limits until a sum limit is found, where the absolute value of the sum Sum is greater than the sum limits. Once the sum limit is found, the adjustment position is calculated as the product of the sum Sum and a further negative constant U_{B1...w} corresponding to the found sum limit. This is illustrated by blocks 28a-c. If, however, the absolute value of the sum Sum is never greater than any sum limit, wherein, for example, the sum limits are stored in said memory, then the adjustment position equals a minimum adjustment position for the system, which is often zero. This is illustrated by a clock 29 in Fig. 2.

The sample size for the average (n), the sample size for the sum (t), average limits, sum limits and the constants used to calculate the adjustment position may be unique to individual implementations of the method. The objective of the third stage S3 of the controller 5 is to provide a rapid response 21 to a position deviation greater than a minimum threshold. The objective of the fourth stage S4 of the controller 5 is to provide the long response 26 or a confident response to a position variation sustained longer than a minimum time span. The response of the third stage S3 is quicker than the fourth stage S4, because typically n > t. However, adjustment positions determined by the fourth stage S4 of the controller 5 are more certain than the third stage S3, because more data points are used to calculate the adjustment. The controller 5 for the method is robust and can be used in a variety of different implementations by altering the parameters governing the controller's operation. An absolute measurement station in this system measures a completed assembly to gather absolute measurement data on the installation process controlled by the method.

The absolute measurement data gathered by the absolute measurement station is sent to a measurement database, for example, via a computer associated with the measurement station. A computation involved in the system is contained in a controller application. The controller application interacts the measurement data base to extract relevant measurement data for the application, a notification system to send alerts associated with the system, and a local computer for the installation process. The controller application sends and receives data from the local computer for the installation process. The application receives offset files from the local computer, which is used to understand the state of the installation process prior to the application creating and sending a new offset file to the local computer. The new offset file contains any adjustment position changes made by the controller application. A PLC corresponding to the installation process triggers the installation robot to extract a new offset file from the local computer. The installation robot performs its installation process based on the data received from the local computer. Lastly, a process should exist that selects vehicles, i.e. completed second assemblies for measurement.

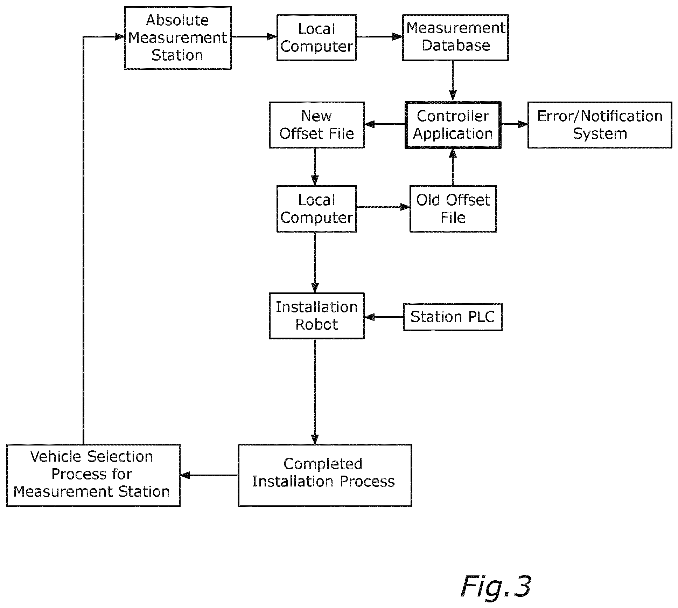

The described system also outlines a possible implementation of the method for a generic system. However, different iterations of the system overview may consist that combine two or more elements of Fig. 3 to produce the same result for a more specific application. For example, a certain type of robot may be equipped to directly interact with the measurement database or measurement station, and the controller application could be embedded within the robot program. The provided overview illustrates the minimum systems that may be used for realizing the method, however, implementations of the method may utilize systems which contain two or more of the individually described systems in Fig. 3. In particular, Fig. 3 provides a system overview for a generic implementation of the method.

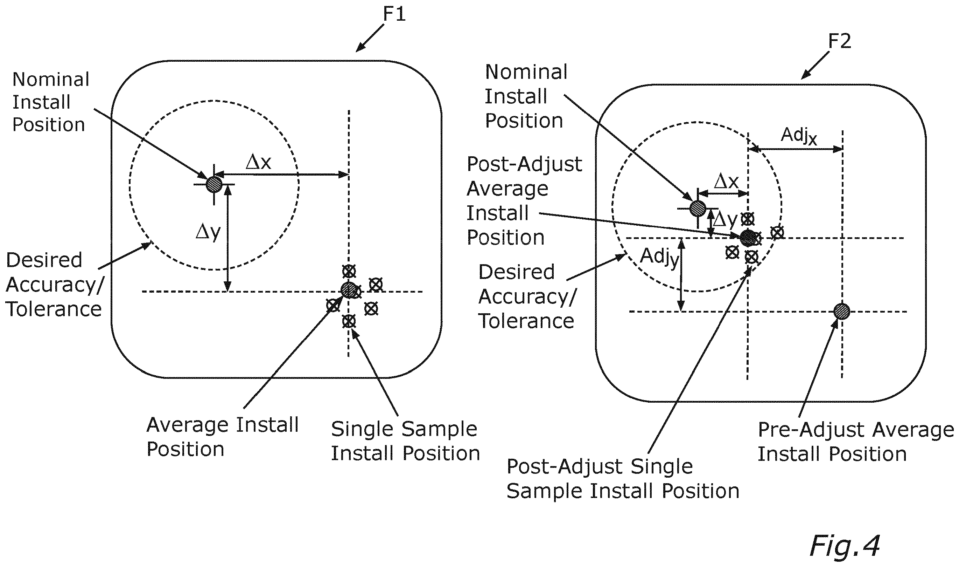

Lastly, Fig. 4 provides a graphical representation of the method on an installation process. Fig. 5 comprises a pre-adjustment figure F1 illustrating multiple measured installation points located away from the nominal (target) installation point. In this regard, the respective measured single installation point is illustrated by a circle and a cross therein. Additionally, a circle represents the decided accuracy of the installation process. In the provided example, the average position which is also referred to as an average installation position, is illustrated by a field circle. In the provided example, the average position deviation of the last six installation points is calculated, and an adjustment position in x and y was determined as a proportion of Δx and Δy, respectively. Moreover, Fig. 4 comprises a post-adjustment figure F2. The post-adjustment figure F2 illustrates the position deviation of the five installation processes occurring after the installation position was adjusted. The average position deviation of the installation process is within the process's accuracy after the x- and y-position adjustments. Therefore, no further position adjustments are required.

In comparison with conventional solutions, the method illustrated and described with reference to Figs. 1 to 4 may have the following advantages:
- better position accuracy
- reduction of manual monitoring time
- therefore cost savings and improved process efficiency
- improved vehicle quality
- improved cycle times stability in vehicle assembly process
- improved ergonomics in vehicle assembly process
- applicable process to feature installation processes that could benefit from similar advantages.

### Reference signs

- 1: arrow
- 2: electronic control unit
- 3: arrow
- 4: element
- 5: block
- 6: arrow
- 7: arrow
- 8: arrow
- 9: element
- 10: arrow
- 11: arrow
- 12: block
- 13: element
- 14: plant
- 15: block
- 16: block
- 17: arrow
- 18: element
- 19: system safeties
- 20a-c: error check
- 21: fast response
- 22a-c: step
- 23a-c: block
- 24: block
- 25: block
- 26: long response
- 27a-c: step
- 28a-c: block
- 29: block
- F1: pre-adjustment figure
- F2: post-adjustment figure
- S1: first stage
- S2: second stage
- S3: third stage
- S4: fourth stage

## Claims

1. A method for controlling a robot by an electronic control unit (2), the robot installing at least one first component on a second component thereby producing a first assembly comprising the first and second components, wherein the method comprises:
- determining, by the electronic control unit (2), a target position at which the first component is to be installed on the second component by the robot;
- determining, by the electronic control unit (2), absolute measurement data characterizing at least one actual installation position at which a first component of at least one completed second assembly is installed on a second component of the completed second assembly identical in construction to the first assembly to be produced by the robot;
- determining, by the electronic control unit (2), at least one deviation value (Eᵢ) characterizing a deviation of the least one actual installation position from the target position; and
- controlling, on the basis of the deviation value (Eᵢ), the robot by a controller (5) executed by the electronic control unit (2);
**characterized in that**
the controller (5), on the basis of the deviation value (Eᵢ), calculates and provides at least one current adjustment value (Adj) by which a nominal position of the robot is adjusted, wherein the controller (5) calculates for each of a predetermined number of preceding, second adjustment values average values (Avg) of the deviation values (Ei) by which the nominal position had been adjusted at preceding points in time, wherein the current adjustment value (Adj) is calculated on the basis of its corresponding average value (Avg), and wherein the controller (5) successively compares the average value with decreasing average limits until the average value is greater than that one of the average limits the average value was last compared with, and wherein the controller (5) chooses the average limit the average value was last compared with.

2. The method according to claim 1,
wherein the controller (5) determines a time span between a current time and the last time the nominal position of the robot had been adjusted, wherein the robot is controlled by the controller (5) on the basis of the time span.

3. The method according to claim 2,
wherein the nominal position of the robot is adjusted by the current adjustment value (Adj) if the time span exceeds a predetermined threshold.

4. The method according to claim 3,
wherein a first criterion which must be met for the nominal position of the robot to be adjusted by the current adjustment value (Adj) comprises that the time span exceeds the predetermined threshold, and wherein at least one additional, second criterion must be met for the nominal position of the robot to be adjusted by the current adjustment value (Adj).

5. The method according to claim 4,
wherein the additional, second criterion comprises that an amount of data collected for adjusting the nominal position exceeds a predetermined, second threshold.

6. The method according to claim 1,
wherein:
- the adjustment value is calculated on the basis of a product of the chosen average limit and a constant corresponding to the chosen average limit.

7. The method according to any one of the preceding claims,
wherein the controller (5) performs a plurality of successive calculation steps in which the average value is calculated respectively, wherein the controller (5) calculates a sum of the average values calculated in the preceding calculation steps, and wherein the current adjustment value is calculated on the basis of the sum.

8. The method according to claim 7,
wherein:
- the controller (5) successively compares the sum with decreasing sum limits until the sum is greater than that one of the sum limits the sum was last compared with, and wherein the controller (5) choses the sum limit the sum was last compared with, and/or
- the adjustment value is calculated on the basis of a product of the chosen sum limit and a further constant corresponding to the chosen sum limit.

9. The method according to any one of the preceding claims,
wherein the controller (5) is part of a closed loop feedback control system by which the robot is controlled.

10. The method according to any one of the preceding claims,
wherein the controller (5) is part of a closed loop feedback control system by which the robot is controlled and/or a stud is used as the first component and/or a self-supporting body of a passenger car is used as the second component.

## Patentansprüche

1. Verfahren zum Steuern eines Roboters durch eine elektronische Steuereinheit (2), wobei der Roboter mindestens ein erstes Bauteil auf einem zweiten Bauteil installiert und dadurch eine erste Baugruppe umfassend das erste und zweite Bauteil erzeugt, wobei das Verfahren umfasst:
- Bestimmen, durch die elektronische Steuereinheit (2), einer Soll-Position, an welcher das erste Bauteil durch den Roboter auf dem zweiten Bauteil zu installieren ist;
- Bestimmen, durch die elektronische Steuereinheit (2), von absoluten Messdaten, welche mindestens eine tatsächliche Installationsposition charakterisieren, an welcher ein erstes Bauteil mindestens einer fertiggestellten zweiten Baugruppe auf einem zweiten Bauteil der fertiggestellten zweiten Baugruppe installiert ist, die baugleich zu der durch den Roboter zu erzeugenden ersten Baugruppe ist;
- Bestimmen, durch die elektronische Steuereinheit (2), mindestens eines Abweichungswerts (Ei), welcher eine Abweichung der mindestens einen tatsächlichen Installationsposition von der Soll-Position charakterisiert; und
- Steuern, auf der Grundlage des Abweichungswerts (Ei), des Roboters durch eine Steuerung (5), die durch die elektronische Steuereinheit (2) ausgeführt wird;
**dadurch gekennzeichnet, dass**
die Steuerung (5), auf der Grundlage des Abweichungswerts (Ei), mindestens einen aktuellen Anpassungswert (Adj) berechnet und bereitstellt, durch welchen eine Nennposition des Roboters angepasst wird, wobei die Steuerung (5) für jede einer vorbestimmten Anzahl vorhergehender, zweiter Anpassungswerte Mittelwerte (Avg) der Abweichungswerte (Ei) berechnet, durch welche die Nennposition zu vorhergehenden Zeitpunkten angepasst worden war, wobei der aktuelle Anpassungswert (Adj) auf der Grundlage seines entsprechenden Mittelwerts (Avg) berechnet wird, und wobei die Steuerung (5) den Mittelwert sukzessive mit abnehmenden Mittelwert-Grenzwerten vergleicht, bis der Mittelwert größer ist als derjenige der Mittelwert-Grenzwerte, mit dem der Mittelwert zuletzt verglichen wurde, und wobei die Steuerung (5) den Mittelwert-Grenzwert wählt, mit dem der Mittelwert zuletzt verglichen wurde.

2. Verfahren nach Anspruch 1,
wobei die Steuerung (5) eine Zeitspanne zwischen einem aktuellen Zeitpunkt und dem letzten Zeitpunkt bestimmt, zu dem die Nennposition des Roboters angepasst worden war, wobei der Roboter durch die Steuerung (5) auf der Grundlage der Zeitspanne gesteuert wird.

3. Verfahren nach Anspruch 2,
wobei die Nennposition des Roboters durch den aktuellen Anpassungswert (Adj) angepasst wird, wenn die Zeitspanne einen vorbestimmten Schwellenwert überschreitet.

4. Verfahren nach Anspruch 3,
wobei ein erstes Kriterium, welches erfüllt sein muss, damit die Nennposition des Roboters durch den aktuellen Anpassungswert (Adj) angepasst wird, umfasst, dass die Zeitspanne den vorbestimmten Schwellenwert überschreitet, und wobei mindestens ein zusätzliches, zweites Kriterium erfüllt sein muss, damit die Nennposition des Roboters durch den aktuellen Anpassungswert (Adj) angepasst wird.

5. Verfahren nach Anspruch 4,
wobei das zusätzliche, zweite Kriterium umfasst, dass eine Menge von Daten, die zum Anpassen der Nennposition gesammelt wurden, einen vorbestimmten, zweiten Schwellenwert überschreitet.

6. Verfahren nach Anspruch 1,
wobei:
der Anpassungswert auf der Grundlage eines Produkts des gewählten Mittelwert-Grenzwerts und einer Konstanten, die dem gewählten Mittelwert-Grenzwert entspricht, berechnet wird.

7. Verfahren nach einem der vorhergehenden Ansprüche,
wobei die Steuerung (5) eine Vielzahl aufeinanderfolgender Berechnungsschritte durchführt, in denen der Mittelwert jeweils berechnet wird, wobei die Steuerung (5) eine Summe der Mittelwerte berechnet, die in den vorhergehenden Berechnungsschritten berechnet wurden, und wobei der aktuelle Anpassungswert auf der Grundlage der Summe berechnet wird.

8. Verfahren nach Anspruch 7,
wobei:
die Steuerung (5) die Summe sukzessive mit abnehmenden Summen-Grenzwerten vergleicht, bis die Summe größer ist als derjenige der Summen-Grenzwerte, mit dem die Summe zuletzt verglichen wurde, und wobei die Steuerung (5) den Summen-Grenzwert wählt, mit dem die Summe zuletzt verglichen wurde, und/oder der Anpassungswert auf der Grundlage eines Produkts des gewählten Summen-Grenzwerts und einer weiteren Konstanten, die dem gewählten Summen-Grenzwert entspricht, berechnet wird.

9. Verfahren nach einem der vorhergehenden Ansprüche,
wobei die Steuerung (5) Teil eines geschlossenen Rückkopplungs-Regelsystems ist, durch welches der Roboter gesteuert wird.

10. Verfahren nach einem der vorhergehenden Ansprüche,
wobei die Steuerung (5) Teil eines geschlossenen Rückkopplungs-Regelsystems ist, durch welches der Roboter gesteuert wird, und/oder ein Bolzen als das erste Bauteil verwendet wird, und/oder eine selbsttragende Karosserie eines Personenkraftwagens als das zweite Bauteil verwendet wird.

## Revendications

1. Procédé de commande d'un robot par une unité de commande électronique (2), le robot installant au moins un premier composant sur un deuxième composant en produisant ainsi un premier ensemble comprenant les premier et deuxième composants, le procédé comprenant:
- la détermination, par l'unité de commande électronique (2), d'une position cible à laquelle le premier composant doit être installé sur le deuxième composant par le robot;
- la détermination, par l'unité de commande électronique (2), de données de mesure absolues caractérisant au moins une position d'installation réelle à laquelle un premier composant d'au moins un deuxième ensemble terminé est installé sur un deuxième composant du deuxième ensemble terminé identique en construction au premier ensemble à produire par le robot;
- la détermination, par l'unité de commande électronique (2), d'au moins une valeur de déviation (Ei) caractérisant une déviation de la au moins une position d'installation réelle par rapport à la position cible; et
- la commande, sur la base de la valeur de déviation (Ei), du robot par un contrôleur (5) exécuté par l'unité de commande électronique (2);
**caractérisé en ce que**
le contrôleur (5), sur la base de la valeur de déviation (Ei), calcule et fournit au moins une valeur d'ajustement actuelle (Adj) par laquelle une position nominale du robot est ajustée, le contrôleur (5) calculant pour chacune d'un nombre prédéterminé de valeurs d'ajustement précédentes, deuxièmes, des valeurs moyennes (Avg) des valeurs de déviation (Ei) par lesquelles la position nominale avait été ajustée à des points dans le temps précédents, la valeur d'ajustement actuelle (Adj) étant calculée sur la base de sa valeur moyenne correspondante (Avg), et le contrôleur (5) comparant successivement la valeur moyenne avec des limites moyennes décroissantes jusqu'à ce que la valeur moyenne soit supérieure à celle des limites moyennes avec laquelle la valeur moyenne a été comparée en dernier, et le contrôleur (5) choisissant la limite moyenne avec laquelle la valeur moyenne a été comparée en dernier.

2. Procédé selon la revendication 1,
le contrôleur (5) déterminant un intervalle de temps entre un temps actuel et la dernière fois où la position nominale du robot avait été ajustée, le robot étant commandé par le contrôleur (5) sur la base de l'intervalle de temps.

3. Procédé selon la revendication 2,
la position nominale du robot étant ajustée par la valeur d'ajustement actuelle (Adj) si l'intervalle de temps dépasse un seuil prédéterminé.

4. Procédé selon la revendication 3,
un premier critère qui doit être rempli pour que la position nominale du robot soit ajustée par la valeur d'ajustement actuelle (Adj) comprenant que l'intervalle de temps dépasse le seuil prédéterminé, et au moins un critère supplémentaire, deuxième, devant être rempli pour que la position nominale du robot soit ajustée par la valeur d'ajustement actuelle (Adj).

5. Procédé selon la revendication 4,
le critère supplémentaire, deuxième, comprenant qu'une quantité de données collectées pour ajuster la position nominale dépasse un seuil prédéterminé, deuxième.

6. Procédé selon la revendication 1,
dans lequel:
la valeur d'ajustement est calculée sur la base d'un produit de la limite moyenne choisie et d'une constante correspondant à la limite moyenne choisie.

7. Procédé selon l'une quelconque des revendications précédentes,
le contrôleur (5) effectuant une pluralité d'étapes de calcul successives dans lesquelles la valeur moyenne est calculée respectivement, le contrôleur (5) calculant une somme des valeurs moyennes calculées dans les étapes de calcul précédentes, et la valeur d'ajustement actuelle étant calculée sur la base de la somme.

8. Procédé selon la revendication 7,
dans lequel:
le contrôleur (5) compare successivement la somme avec des limites de somme décroissantes jusqu'à ce que la somme soit supérieure à celle des limites de somme avec laquelle la somme a été comparée en dernier, et le contrôleur (5) choisit la limite de somme avec laquelle la somme a été comparée en dernier, et/ou la valeur d'ajustement est calculée sur la base d'un produit de la limite de somme choisie et d'une constante supplémentaire correspondant à la limite de somme choisie.

9. Procédé selon l'une quelconque des revendications précédentes,
le contrôleur (5) faisant partie d'un système de régulation à rétroaction en boucle fermée par lequel le robot est commandé.

10. Procédé selon l'une quelconque des revendications précédentes,
le contrôleur (5) faisant partie d'un système de régulation à rétroaction en boucle fermée par lequel le robot est commandé et/ou un goujon étant utilisé comme premier composant et/ou une carrosserie autoporteuse d'une voiture particulière étant utilisée comme deuxième composant.
